# EUROPEAN PATENT APPLICATION

(11) **EP 3 367 119 A1**
(43) Date of publication of application: **29.08.2018**
(21) Application number: 17158198.6
(22) Date of filing: 27.02.2017
(51) Int. Cl.: G01S 13/02, G01S 13/28, G01S 13/93, G01S 13/34

(54) **RADAR**

(71) Applicant: NXP B.V., 5656 AG Eindhoven (NL)
(72) Inventor: Vaucher, Cicero Silveira, Redhill, Surrey RH1 1QZ (GB); Vilakathara, Haridas, Redhill, Surrey RH1 1QZ (GB); Saric, Taric, Redhill, Surrey RH1 1QZ (GB); Manikandan, Panchapakesan, Redhill, Surrey RH1 1QZ (GB)
(74) Representative: Terblanche, Candice Jane

(57) **Abstract**

A front end for a radar system and a method of operation are described. The front end comprises a transmitter channel, a receiver channel, a chirp generator arranged to supply a chirp signal over a chirp signal frequency range to the first transmitter channel and the first receiver channel; and a timing engine for controlling operation of the first transmitter channel and the first receiver channel. The timing engine controls the chirp generator to generate a first chirp signal over a first frequency range and a second chirp signal over a second frequency range which span the chirp signal frequency range. The timing engine controls the front end to stop acquiring data at a stop frequency toward the end of the first chirp signal and to start acquiring data at a start frequency toward the start of the second chirp signal, which is contiguous with the stop frequency.

## Description

The present specification relates to radar and in particular to chirp generation for radar systems.

Radar systems are generally known and include pulsed radar systems and continuous wave radar systems. One form of continuous wave radar uses frequency modulation of the underlying carrier frequency. The frequency modulated signal is often referred to as a chirp or sweep signal in which the frequency of the carrier signal is smoothly increased or decreased.

One application of chirp radar is range finding or proximity detection. An important feature of these may be range resolution which is the ability to separate objects that are close together in linear distance from the radar system. Generally speaking, range resolution is determined primarily by the bandwidth of the chirp generated and emitted by the radar front end.

One particular application of proximity detection is radar systems suitable for vehicle parking applications to detect objects or obstructions while a vehicle is being parked. For example, automotive radar operating in the 76-81 GHz frequency range allows a chirp bandwidth of up 5GHz in principal. In practice, the maximum chirp bandwidth for parking applications is more like 4GHz, i.e. from 77GHz to 81GHz, and is sometimes referred to as the "79GHz band".

As noted above, the greater the chirp bandwidth the better the range resolution, irrespective of the particular application of the radar system. Hence, in many applications it may be desirable to be able to provide a wide chirp bandwidth. One approach to doing so is to generate the chirp use a voltage controller oscillator and having a single tuning voltage range. An analog tuning voltage for the voltage controlled oscillator is varied over a wide range of values, for example 5V or so, in order to generate a chirp signal of sufficient bandwidth for improved range resolution, e.g. approximately 5GHz. However, there are performance issues with this approach

Hence, apparatus and methods for generating a chirp providing good range resolution would be beneficial.

According to a first aspect of the present disclosure, there is provided a front end for a radar system, comprising: at least a first transmitter channel; at least a first receiver channel; a chirp generator arranged to supply a chirp signal over a chirp signal frequency range to the first transmitter channel and the first receiver channel; and a timing engine arranged and configured to control operation of the first transmitter channel and the first receiver channel and wherein the timing engine is further configured to control the chirp generator to generate a first chirp signal over a first frequency range and a second chirp signal over a second frequency range, wherein the first frequency range and the second frequency range spans the chirp signal frequency range, and wherein the timing engine is further configured to control the front end to stop acquiring data at a stop frequency toward the end of the first chirp signal and to start acquiring data at a start frequency toward the start of the second chirp signal, wherein the stop frequency and the start frequency are contiguous.

In one or more embodiments, the first frequency range and the second frequency range may overlap.

In one or more embodiments, the stop frequency and the start frequency may be the same frequency.

In one or more embodiments, the stop frequency and the start frequency may differ by a frequency step.

In one or more embodiments, the stop frequency may be greater than the start frequency.

In one or more embodiments, the stop frequency may be less than the start frequency.

In one or more embodiments, the frequencies before the stop frequency may overlap with the frequencies after the start frequency.

In one or more embodiments, the chirp generator may include a voltage controlled oscillator and the voltage controlled oscillator may be controllable by a tuning voltage and/or may be operable over a plurality of frequency ranges.

In one or more embodiments, an end frequency and a beginning frequency overlap for successive frequency ranges of the plurality of frequency ranges of the voltage controlled oscillator.

In one or more embodiments, the voltage controlled oscillator may have a linear gain over each of the plurality of frequency ranges.

In one or more embodiments, the frequency range of operation of the voltage controlled oscillator may be digitally configurable.

In one or more embodiments, the chirp generator may include a phase locked loop arranged and configured to control the frequency of the voltage controlled oscillator.

In one or more embodiments, the front end for a radar system may further comprise a sweep controller arranged and configured to control a frequency sweep of the chirp generator.

In one or more embodiments, the phase locked loop may include a divider in a feedback path and the sweep controller may be configured and arranged to supply an integer N signal and/or a fractional N signal to the divider to set a value of the divider.

In one or more embodiments, the timing engine may be configured to generate a profile selection signal to select an operating profile of the timing engine and/or the chirp generator and/or the sweep controller corresponding to a current chirp signal.

In one or more embodiments, the timing engine and/or the chirp generator and/or the sweep controlled may each include a first register storing a first operating profile associated with the first frequency range and a second register storing a second operating profile associated with the second frequency range.

In one or more embodiments, the timing engine may be further configured to cease data acquisition by the front end during a time gap between the stop frequency of the first chirp signal and the start frequency of the second chirp signal.

In one or more embodiments, the voltage controlled oscillator may be implemented as a BiCMOS integrated circuit and the tuning voltage may have a range of less than 3V.

In one or more embodiments, the voltage controlled oscillator may be implemented as a CMOS integrated circuit and the tuning voltage may have a range of less than 1.8V.

In one or more embodiments, the width of the first frequency range may be 2GHz, the width of the second frequency range may be 2GHz and the width of the chirp signal frequency range may be 4GHz.

According to a second aspect of the present disclosure, there is provided a radar system, including the radar front end of the first aspect.

In one or more embodiments, the radar system may be an automotive radar system.

According to a third aspect of the present disclosure, there is provided a method of controlling a front end of a radar system to emulate a chirp signal over a chirp signal frequency range, wherein the front end includes at least a first transmitter channel, at least a first receiver channel, a chirp generator arranged to supply chirp signals to the at least first transmitter channel and the at least first receiver channel and a timing engine arranged to control the chirp generator, the method comprising: controlling the chirp generator to generate a first chirp signal over a first frequency range; controlling the front end to stop acquiring data at a stop frequency toward the end of the first chirp signal; controlling the chirp generator to generate a second chirp signal over a second frequency range; and controlling the front end to start acquiring data at a start frequency toward the start of the second chirp signal, wherein the first frequency range and the second frequency range spans the chirp signal frequency range and the start frequency and the stop frequency are contiguous.

Features of the first aspect may also be counterpart features for the third aspect.

Embodiments of the invention will now be described in detail, by way of example only, and with reference to the accompanying drawings, in which:
Figure 1 shows a schematic block diagram of an example radar front end of a radar system;
Figure 2 shows a graphical representation of the behaviour of a chirp generator of the radar front end shown in Figure 1;
Figure 3 shows a schematic block diagram of a timing engine part of the radar front end shown in Figure 1;
Figure 4 shows a schematic block diagram of a sweep controller part of the radar front end shown in Figure 1;
Figure 5 shows a schematic block diagram of a chirp generator of the radar front end shown in Figure 1;
Figure 6 shows a schematic process flow chart illustrating operation of the radar front end shown in Figure 1; and
Figure 7 shows a graphical representation of the emulation of a single chirp by a sequence of chirps from the chirp generator of the radar front end shown in Figure 1.

Similar items in the different Figures share like reference signs unless indicated otherwise.

Apparatus and methods for generating a chirp will be described below. The following description refers to an automotive radar system as a particular example. However, the same approach can be applied to any type of radar system using a chirp. It will be appreciated that the approach can be applied to radar systems having other fields of application, including any industrial application were high range resolution is required.

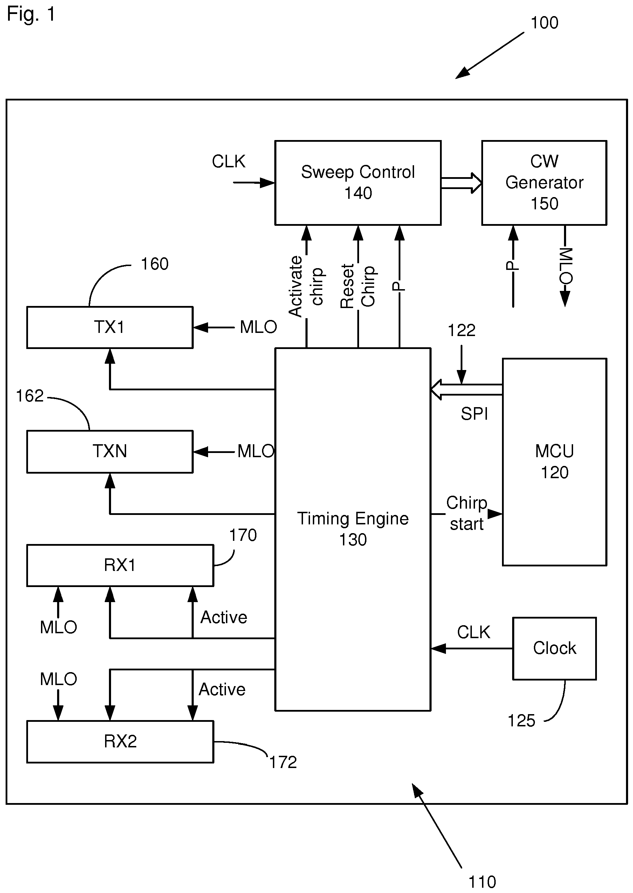

With reference to Figure 1, there is shown a schematic block diagram of a radar system 100 and in particular a radar front end 110. A number of the parts of the overall radar system 100 are omitted for the sake of clarity, but will be apparent to a person of ordinary skill in the art. The radar system 100 includes a micro controller unit 120 which can communicate with other parts of the radar front end over a serial peripheral interface (SPI) bus 122. A clock circuit 125 is also provided and configured to generate and supply various clock signals to parts of the radar front end. The clock circuit 125 may generate and supply a 40MHz clock signal and also a 480MHz clock signal.

The radar front end 110 includes a timing engine 130, a sweep controller 140 and a continuous wave generator 150. The analogue front end 110 includes at least a first transmission path or channel 160. The other embodiments, a plurality of transmission paths, 1 to N, may be provided, as illustrated by the Nth transmission path or channel 162. The analogue front end also includes at least a first receiver channel or path 170. The other embodiments, the analogue front end may include a plurality of receiver paths or channels, 1 to N as illustrated to the illustrated by the Nth receiver path 172. Each transmission path may be connected to a respective transmission antenna and each receiver path may similarly be connected to a respective receiver antenna (not shown).

Each transmitter path may include a switching device, a phase shifter and a power amplifier. Each receiver path may include a low noise amplifier, mixer, variable gain amplifier, band pass filter, analogue to digital converter and data serialiser which outputs a serial digital data stream for use by the remainder of the radar system.

As described in greater detail below, the timing engine is configured to generate various timing and control signals to control operation of various parts of the radar front end. In particular, the timing engine 130 is configured to provide an activate chirp signal, a reset chirp signal and a profile selection signal (P) to the sweep controller 140. The profile selection signal (P) is also supplied to the CW generator 150. The CW generator outputs a master local oscillator (MLO) signal, which is a sequence of individual chirp signals, and which is supplied to each of the transmission channels 160, 162 and also to the mixer of each of the receiver channels 170, 172. Various other control signals can also be supplied by timing engine 130 to control operation of the transmitted channels and receiver channels as are generally known by a person of ordinary skill in the art.

Similarly, the timing engine is configured to generate an active signal indicating when the receiver channels should be active in order to receive reflected radar signals from any target. The active signal may be supplied to an analog to digital converter (ADC) in each of the receiver channels 170, 172 to activate each of the ADCs during a data acquisition time period and turn the ADCs off outside the data acquisition time period. The active signal indicates the precise time when the receiver channels 170, 172 are effectively acquiring reflected radar signals. The timing engine 130 also supplies the profile selection signal (P) for each receiver channel. Hence, the active signal may be used to start data acquisition at a start frequency at the start of a chirp and to stop data acquisition at a stop frequency at the end of a chirp.

The continuous wave generator 150 which supplies the master local oscillator signal (MLO) acts as a chirp generator and supplies a sequence of individual chirp signals (MLO) as an input to each transmission channel and also as an input to the mixer of each receiver channel. The chirp generator 150 includes a voltage controlled oscillator which is configured to generate a sequence of individual chirp signals, which slightly overlap in frequency, and which can be used by the front end to emulate a single chirp signal extending over a greater frequency range.

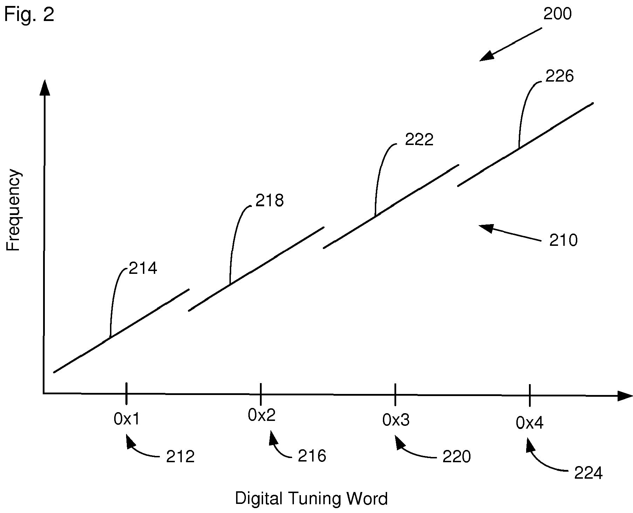

Figure 2 shows a graphical representation 200 of a tuning curve 210 of the voltage controlled oscillator used in chirp generator 150. Figure 2 shows a plot of the voltage controlled oscillator frequency against a digital tuning word value which can be used to select a frequency sub-band of the voltage controlled oscillator. For example, for a first digital tuning word value 212 the frequency of the voltage controlled oscillator can be substantially lineally increased from a lower value to a higher value by increasing a control voltage applied to the voltage control oscillator. The frequency response for the first digital tuning word is represented by line segment 214. The voltage controlled oscillator tuning voltage range may be, for example, 1.1V. By selecting a second digital tuning word value 216, the frequency of the voltage controlled oscillator may again by lineally increased by applying the same magnitude of tuning voltage input, as represented by second line segment 218. Similarly, a third frequency range may be provided by a third digital tuning word and the same tuning voltage range, corresponding to line segment 222, and similarly by a fourth digital tuning word 224 and tuning voltage range give rise to corresponding to line segment 226.

As will be noted in Figure 2, the frequency of the voltage controlled oscillator overlaps toward a maximum value, or upper end, of a digital tuning word and at a minimum value, or lower end, for a subsequent digital tuning word.

Hence, by using a voltage controlled oscillator with a number of overlapping frequency sub-bands of operation, and with each frequency sub-band having a substantially constant gain as a function of voltage, a substantially constant phase noise performance can be provided and a linear chirp behaviour across a broad frequency range, e.g. 4GHz. As described in greater detail below, the frequency sub-bands of operation of the voltage controlled oscillator are controlled by a digital tuning word, as illustrated in Figure 2. The voltage controlled oscillator also has an analogue tuning voltage input. A restricted analogue tuning voltage range (e.g. 1.1V) is reused several times for each digital sub band selected by the corresponding tuning word. As the digital sub bands overlap at their extreme values, a large effective chirp bandwidth can be provided by a sequence of individual chirps while retaining good phase noise performance and high linearity.

For example, for an application having a 4GHz chirp bandwidth, a sequence of two 2GHz chirps with precise timing and frequency relationships can be used instead.

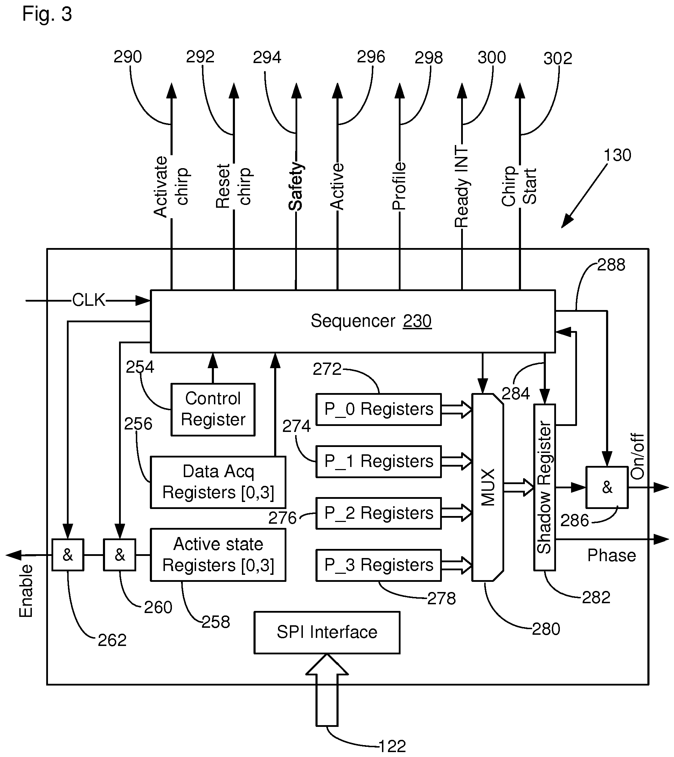

With reference Figure 3, there is shown a schematic block diagram of the timing engine 130 of the radar front end 110. The timing engine 130 includes a sequencer 250 and receives a system clock signal as an input. Timing engine 130 also includes an SPI interface 252 via which the timing engine 130 can communicate with the micro controller unit 120 over SPI bus 122. Timing engine 130 includes a control register 254 and first to fourth data acquisition registers 256, which are used to store various data items and/or information for controlling properties of the data acquisition sequence, such as the duration of each individual chirp and the number of samples to be taken by the ADC during each chirp. First to fourth active state registers 258 are also provided in communication with a first AND device 260 and a second AND device 262. The first AND device gate is arranged to receive a chirp sequence active signal from sequencer 250 and the second AND device 262 is arranged to receive a power down between chirps signal from sequencer 250. The output of the second AND device 262 is an enable signal which may be supplied to the transmitter channels and/or receiver channels to enable them when high and disable them when low. The enable signal may be used to power down the transmitter channels and/or receiver channels after a sequence of chirps has been completed

Timing engine 130 also includes first to fourth profile registers 272, 274, 276, 278. Each of the profile registers stores data and/or information related to the timing of the waveform and phase states of the signal output by the transmitter channels 160, 162. Hence, the first profile register 272 stores various data items associated with the first profile, P_0. Similarly, registers 274, 276 and 278 respectively store data items associated with the second, P_1, third, P_2, and fourth, P_3, profiles. The outputs of the profile registers are connected to a multiplexer 280 to which the profile selection signal, P, can be supplied by sequencer 250 to select a one of the profiles as the current profile. The output of multiplexer 280 is connected to a shadow register 282 for storing the data items from the currently selective profile register. The sequencer 250 can issue a control signal on line 284 to load data from the profile registers into the shadow register. Timing parameters are then supplied from shadow register 282 to the sequencer 250 for processing. Shadow register 282 is configured to generate as an output a phase control signal which can be supplied to each of the transmission channels. A further AND device 286 is arranged to receive a transmitter active signal on line 288 from sequencer 250. Further AND device 286 outputs an on/off control signal which may be supplied to the transmitter channels to turn off the carrier signal during the chirp reset time to avoid the risk of out-of-band radiation during settling transients of the phase locked loop of the chirp generator.

Sequencer 250 is configured to control the overall operation of the timing engine 130 and outputs a number of control signals used by other parts of the radar front end. For example, the sequencer 250 is configured to generate and output and activate chirp signal 290, a reset chirp signal 292, a safety monitoring signal 294, the active signal 296 used to control data acquisition by the receiver channels, the profile selection signal 298, a Ready INT signal 300 which indicates that a sequence of individual chirps has been completed and a chirp start signal 302 to indicate the start of a sequence of individual chirps.

The timing engine is configured to precisely control the timing of the chirp operation of the chirp generator. The sequencer controls the timing engine to issue the chirp start and chirp reset control signals to the sweep controller 140 and the active signal to the analogue to digital converters within the receiver channels 170, 172 with precise timing and to provide reducible chirp sequence operation.

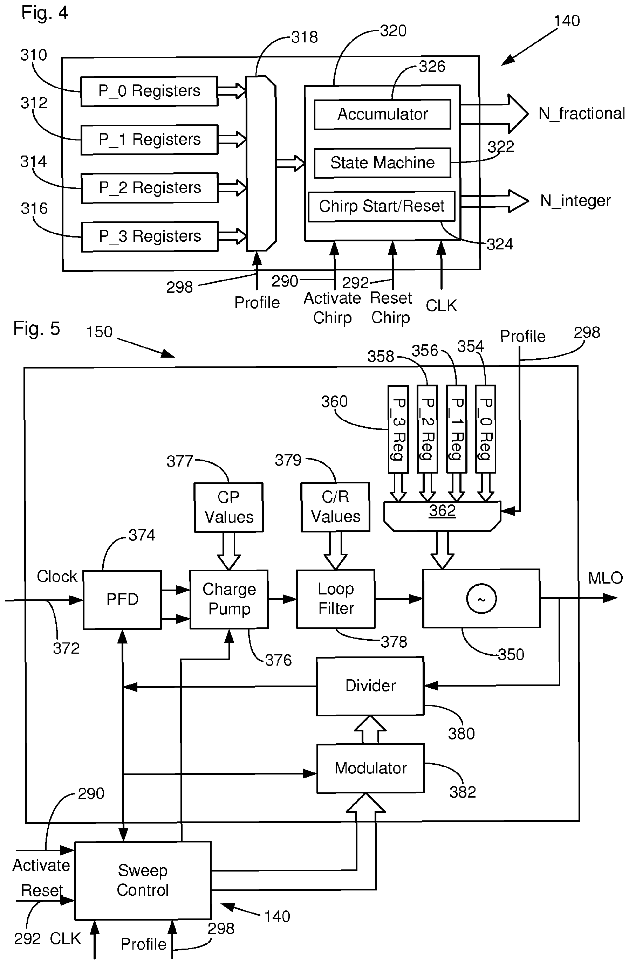

Figure 4 shows a schematic block diagram of the sweep controller 140 in greater detail. As illustrated in Figure 1, the sweep controller interacts with the chirp generator to control its operation to generate the sequence of contiguous individual chirp sequences to emulate an overall chirp signal of greater frequency range. The sweep controller 140 includes first to fourth profile registers 310, 312, 314 and 316 whose outputs are in communication with a multiplexer 318 which receives the profile selection signal 298 as an input. Sweep controller also includes control logic 320 which may be in the form of a state machine as illustrated by block 322. Profile selection signal 298 can select a one of the profile registers whose data is transferred via multiplexer 318 into the control logic 320. Control logic 320 is arranged to receive the activate chirp signal 290 and reset chirp signal 292 from sequencer 250 and also the clock signal from clock circuit 125. Control logic 320 also includes a chirp start and reset function as illustrated by block 324. Control logic 320 is configured using accumulator block 326 to generate and output N_fractional and/or N_integer values to the chirp generator to control operation of a phase locked loop. On receipt of an activate chirp signal 290, for a currently selected profile, the accumulator gradually increments in value and outputs corresponding values of the N_fractional and/or N_integer signals to gradually increment the frequency of the phase locked loop until a chirp reset signal is received. A next chirp can then be activated using a next profile downloaded from the profile register for the next chirp.

With reference to Figure 5 there is shown a schematic block diagram of the chirp generator 150 of the radar front end 110 in greater detail. Figure 5 also shows the sweep controller 140. The chirp generator 150 includes a voltage controlled oscillator (VCO). As discussed above with reference to Figure 2, the voltage controlled oscillator 350 can operate over a plurality of overlapping frequency sub-bands whose values and ranges can be set by control signals corresponding to a digital tuning word. Such a voltage controlled oscillator 350 is generally known by a person of ordinary skill in the art and a suitable device is described in, for example, US Patent Application Publication no. 2009/0322436, the content of which is incorporated herein by reference in its entirety for all purposes. The frequency sub-band of the VCO 350 can be selected by digital control signals and then the frequency of the VCO can be linearly swept over the currently selected frequency sub-band by a phase locked loop 370 controlled by sweep control circuit 140.

First to fourth profile registers 354, 356, 358, 360 are connected to a multiplexer 362 which receives the profile selection signal 298 at an input. Each of the profile registers stores the settings for a corresponding sub-band of the VCO and which are used to select the current operating sub-band of the VCO. The output of multiplexer 362 is connected to an input of voltage controlled oscillator 350 so that the appropriate data from the currently selected profile register can be output to set the current operating sub band of voltage controlled oscillator 350. The voltage controlled oscillator 350 outputs the master local oscillator (MLO) signal, as a sequence of chirp signals, to each of the transmission channels and receiver channels.

The frequency of the voltage controlled oscillator 350 is controlled and swept by a phase locked loop 370. The phase lock loop 370 takes as an input a clock signal from clock circuit 125. The clock signal input to the phase locked loop may be different to the clock signal used by other parts of the system. For example, the clock signal may be at a frequency of approximately 480MHz, and in particular may be a ∑-Δ modulated clock signal 372. The phase locked loop includes a phase/frequency detector 374, a charge pump 376 and a loop filter 378. The operation of phase locked loop 370 is generally conventional and will be understood by a person of ordinary skill in the art. Generally speaking, the phase/frequency detector 374 detects any changes in the phase of the signal fed back to one of its inputs and generates a suitable signal to correct any changes in the phase to control the overall frequency of operation. First and second outputs of the PFD indicate whether the tuning voltage input to the VCO should be increased or decreased so that the loop eventually reaches phase lock.

A charge pump 376 is provided to convert the phase control signals output by the PFD into a current which is applied to a loop filter 378. Loop filter 378 may be a third order loop filter. Charge pump 376 may receive charge pump values suitable for the current operating frequency of the phase lock loop from a register 377. Similarly, loop filter 378 may receive capacitance and/or resistance values to configure its operation to be suitable for the current frequency of operation of the phase lock loop from a register 379.

The output of loop filter 378 controls the voltage controlled oscillator 350. A signal representative of the output of voltage controlled oscillator 350 is fed back via a divider 380, which may be in the form of a divider chain. The output of divider 380 is fed back to a further input of phase/frequency detector 374. Phase locked loop 370 can also include a modulator block 382. In particular, modulator block 382 may be configured to provide ∑-Δ modulation. Modulator 382 is arranged to receive the N_fractional and/or N_integer values from sweep controller 140. After any ∑-Δ modulation processing, these values are passed to divider chain 380 to adjust the target frequency of the phase locked loop owing to incremental changes in the values of N_fractional and/or N_integer as output by sweep controller 140.

Referring back to Figure 2, when the profile selection signal 298 selects the first profile then the corresponding digital tuning word is output to voltage controlled oscillator 350. The sweep controller also receives the profile selection signal 298 and accesses the relevant data from the first profile register to control the phase locked loop to control the tuning voltage of the VCO to increase the frequency of the chirp output by the voltage controlled oscillator in a linear manner as illustrated in Figure 2.

The profile selection signal 298 which controls the multiplexer of the voltage controlled oscillator 362, and also the multiplexer 318 of the sweep controller, originates from the timing engine 130. Hence, the timing engine 130 directly selects which digital sub band the voltage controlled oscillator is currently operating on. The timing engine also controls the sweep controller 140 to send the sweep control signals to the phase locked loop to control the chirp signal generated by the chirp generator 150.

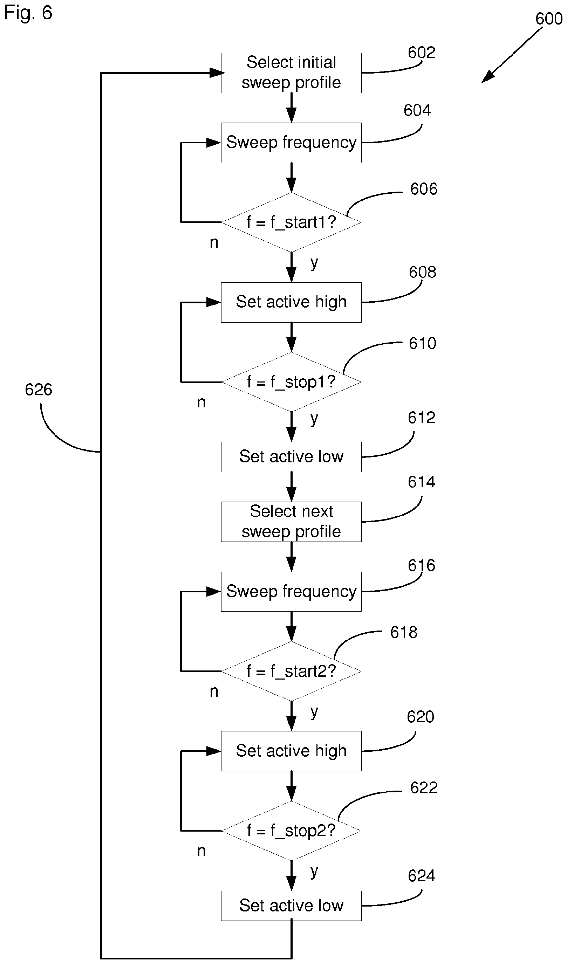

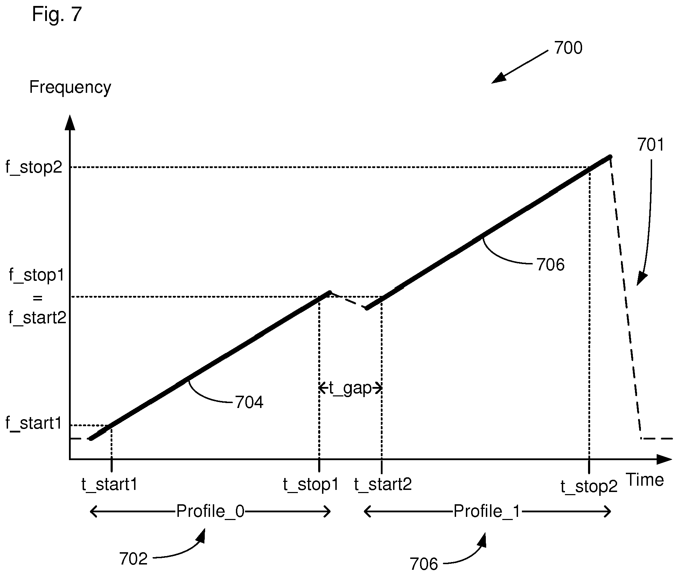

The overall method of operation of the front end 110 will now be described with reference to Figures 6 and 7. Figure 6 shows a process flow chart generally illustrating operation of the timing engine and its control of the other parts of the front end 110. Figure 7 shows a graphical representation 700 of the chirp signals output by chirp generator 150 as a function of time. Dashed line 701 represents the current value of MLO output by CW generator 150 as a function of time.

Figures 6 and 7 illustrated the emulation of a single 4GHz sweep by using a sequence of two consecutive 2GHz chirps. However, it will be appreciated that in other embodiments, a greater number of consecutive individual chirps of differing bandwidths may be used to emulate other sweeps. Hence, in the illustrated method, a sequence of two chirps is performed as defined by a first and second profile. The frequency range of the sequence of chirps (4GHz) is approximately twice the value of each individual chirp (2GHz each).

When sequencer 250 determines that a 4GHz chirp is to be generated, then the timing engine 130 sets the profile selection signal P to select the first profile and the appropriate data items are supplied from the first profile registers into the timing engine, sweep controller and chirp generator. Hence, initially, the first profile (Profile_0) 702 is selected at 602. At 604, the timing engine 130 starts the frequency sweep and starts generating the first chirp signal 704. At 606, the timing engine determines whether the frequency of the chirp signal has reached a lower value, f_start1, being a start frequency of the first chirp at which data acquisition should start. If not, then the frequency sweep continues until the frequency of the chirp generator reaches the start frequency value f_start1. At this time, corresponding to a first start time, t_start1, the timing engine sets the active signal high at 608. Hence, at time t_start1, the receiver channels 170, 172 start acquiring data. The receiver channels are enabled all the time but data acquisition is started by the active signal, which is suppled to each of the ADCs in the receiver channels to enable ADC sampling, being asserted, or going high. Data acquisition is stopped by the active signal being de-asserted, or going low. Hence, the active signal is supplied as a gating signal to gate the ADCs to enable data sampling and hence data acquisition.

Data acquisition continues and it is determined at step 610 whether the current chirp signal frequency has reached an upper limit of f_stop1, being a stop frequency of the first chirp at which data acquisition should stop. When the first chirp 704 reaches the upper limit f_stop1 at time t_stop1, then at 612 the active signal is set low and data acquisition ceases. After time t_stop1 timing engine 130 issues a reset chirp signal 292 to reset the sweep controller and the first chirp signal 704 ends. At 614 the timing engine issues a new profile selection signal 298 to select the second profile register and appropriate values from the second profile register are output to configure the timing engine 130, sweep controller 140 and chirp generator 150. Hence, as illustrated in Figure 7, the second profile 706 is established during a time t_gap between the end of the first chirp 704 and beginning of a second chirp 708. After the second profile has been installed, the phase locked loop and voltage controlled oscillator have been configured to start a frequency sweep as configured by the second profile starting at a start frequency slightly below the frequency at which the first chirp 704 stopped.

At 616, the sweep controller and chirp generator start to operate again during the time t_gap to start the second chirp signal 707 and with the voltage controlled oscillator operating at its second frequency sub band as set by a second digital tuning word, as illustrated in Figure 2.

At 618, it is determined whether the frequency of the second chirp signal has reached a second start frequency, f_start2, being a start frequency for the second chirp at which data acquisition should start again, which is substantially the same as the stop frequency of the first chirp, f_stop1. When it is determined that the frequency of the second chirp signal 708 has reached the start value f_start2 of the start frequency of the second chirp signal at 618, then at 620, the timing engine issues the active signal 296 at time t_start2 to indicate valid data acquisition for the second chirp. Hence, the end of data acquisition and subsequent start of data acquisition are contiguous in frequency. The front end therefore can emulate the operation of a front end using a single chirp frequency of greater frequency range. Data acquisition continues until it is determined that the frequency of the second chirp signal has reached its end value, f_stop2 at 622, being a stop frequency for the second chirp at which data acquisition is stopped. At this time, corresponding to time t_stop2, the active signal 296 is set low at 624. Processing may then loop as illustrated by process flow return line 626 back to step 602 at which the first profile P_0 can again be selected via profile selection signal 298. The process can then loop as many times as required, for example for fast chirp sequence radars.

As best illustrated by Figure 7, it can be seen that the frequency of the first chirp signal 704 when data acquisition was stopped is substantially the same as the frequency of the second chirp signal 708 when data acquisition was started again. Hence, the start frequency for data acquisition during the second chirp, f_start2 is contiguous with the stop frequency at the end of data acquisition on the first chirp f_stop1.
In some embodiments, the stop frequency of a first chirp and the start frequency of a next, second chirp can be the same. For example, the stop frequency of the first chirp may be 78 GHz and the start frequency of the second chirp may also be 78GHz, as far as practically possible. The overlapping of the last data point acquired from the first chirp and the first data point acquired form the second chirp can be handled by data processing. In practice, the start frequency and stop frequency may not be exactly the same owing to implementation imperfections.

In some embodiments, the stop frequency of a first chirp and the start frequency of a next, second chirp can differ by a frequency step. The frequency step is relatively small so that the stop frequency and start frequency are adjacent and hence contiguous. For example, the stop frequency of the first chirp may be 78 GHz and the start frequency of the second chirp may be 78GHz + 5MHz in which case the frequency step is 5MHz. Hence, in this case there is no overlapping of the last data point acquired from the first chirp and the first data point acquired from the second chirp.

Similarly, in embodiments using a decreasing frequency sweep, rather than the increasing frequency sweep illustrated in Figure 7, a relatively small frequency step may be provided between the stop frequency of the first chirp and the start frequency of the next chirp. For example, the stop frequency of the first chirp may be 78 GHz and the start frequency of the second chirp may be 78GHz - 5MHz in which case the frequency step is 5MHz. Hence, in this case there is no overlapping of the last data point acquired from the first chirp and the first data point acquired from the second chirp.

In other embodiments, there may also be a small overlap between the frequencies toward the end of the first chirp before the stop frequency and the frequencies at the beginning of the second chirp after the start frequency, provided that the overlap is sufficiently small that the end of data acquisition and start of data acquisition are contiguous in frequency and hence emulate the behaviour obtained by a single chirp signal extending over the entire chirp signal frequency range.

As the dynamic behaviour of the phase locked loop 370 can be accurately estimated, the duration of time gap t_gap can be set accordingly on the timing engine 130. Hence, the timing engine can be used to stitch together a plurality of individual chirps to emulate a single chirp. In the above example, a first 2GHz chirp, form 76GHz to 78GHz, and a second 2GHz chirp, from 78GHz to 80GHz, are stitched together to emulate a single 4GHz sweep, form 76GHz to 80GHz. Hence, by stopping data acquisition and starting data acquisition at contiguous frequencies of a first chirp and a next chirp, operation of the front end as though using a single chirp signal can be emulated

Various features of the approach described herein can give rise to a number of benefits and advantages.

For example, chirp linearity can be increased as each individual chirp can be more linear than a single chirp extending over the combined bandwidth.

The phase noise performance of the system can be improved as the gain of the voltage controlled oscillator may be smaller for a plurality of shorter chirps compared to a single chirp of equivalent bandwidth. In the example of using a sequence of two 2GHz chirps compared to a single 4GHz sweep, phase noise may be improved by up to 6dB.

The stitching together of multiple chirps can provide a larger bandwidth chirp suitable for high range resolution.

The voltage controlled oscillator may have a lower gain thereby improving stabilisation of the phase lock loop.

Also, a smaller range of tuning voltage may be used to control the voltage controlled oscillator. Hence, there is no need for separate larger supply voltage to provide a larger range of tuning voltage.

Furthermore, as the tuning voltage range for the voltage controlled oscillator may be lower, it may be easier to implement the chirp generator using standard integrated circuit technologies. For example, the analogue tuning voltage may be limited to 1.1V which is compatible with standard CMOS and BiCMOS technologies (typically having voltage limits of approximately 1.8V and 3V respectively).

In this specification, example embodiments have been presented in terms of a selected set of details. However, a person of ordinary skill in the art would understand that many other example embodiments may be practiced which include a different selected set of these details. It is intended that the following claims cover all possible example embodiments.

Any instructions and/or flowchart steps can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

While the disclosure is amenable to various modifications and alternative forms, specifics thereof have been shown by way of example in the drawings and described in detail. It should be understood, however, that other embodiments, beyond the particular embodiments described, are possible as well. All modifications, equivalents, and alternative embodiments falling within the scope of the appended claims are covered as well.

## Claims

1. A front end for a radar system, comprising:
at least a first transmitter channel;
at least a first receiver channel;
a chirp generator arranged to supply a chirp signal over a chirp signal frequency range to the first transmitter channel and the first receiver channel; and
a timing engine arranged and configured to control operation of the first transmitter channel and the first receiver channel and wherein the timing engine is further configured to control the chirp generator to generate a first chirp signal over a first frequency range and a second chirp signal over a second frequency range, wherein the first frequency range and the second frequency range spans the chirp signal frequency range, and wherein the timing engine is further configured to control the front end to stop acquiring data at a stop frequency toward the end of the first chirp signal and to start acquiring data at a start frequency toward the start of the second chirp signal, wherein the stop frequency and the start frequency are contiguous.

2. The front end for a radar system as claimed in claim 1, wherein the chirp generator includes a voltage controlled oscillator and wherein the voltage controlled oscillator is controllable by a tuning voltage and is operable over a plurality of frequency ranges.

3. The front end for a radar system as claimed in claim 2, wherein an end frequency and a beginning frequency overlap for successive frequency ranges of the plurality of frequency ranges of the voltage controlled oscillator.

4. The front end for a radar system as claimed in claim 2 or 3, wherein the voltage controlled oscillator has a linear gain over each of the plurality of frequency ranges.

5. The front end for a radar system as claimed in any of claims 2 to 4, wherein the frequency range of operation of the voltage controlled oscillator is digitally configurable.

6. The front end for a radar system as claimed in any of claims 2 to 5, wherein the chirp generator includes a phase locked loop arranged and configured to control the frequency of the voltage controlled oscillator.

7. The front end for a radar system as claimed in claim 6, and further comprising a sweep controller arranged and configured to control a frequency sweep of the chirp generator.

8. The front end for a radar system as claimed in claim 7, wherein the phase locked loop includes a divider in a feedback path and wherein the sweep controller is configured and arranged to supply an integer N signal and/or a fractional N signal to the divider to set a value of the divider.

9. The front end for a radar system as claimed in any preceding claim, wherein the timing engine is configured to generate a profile selection signal to select an operating profile of the timing engine and/or the chirp generator and/or the sweep controller corresponding to a current chirp signal.

10. The front end for a radar system as claimed in claim 9, wherein the timing engine and/or the chirp generator and/or the sweep controlled each includes a first register storing a first operating profile associated with the first frequency range and a second register storing a second operating profile associated with the second frequency range.

11. The front end for a radar system as claimed in any preceding claim wherein the timing engine is further configured to cease data acquisition by the front end during a time gap between the stop frequency of the first chirp signal and the start frequency of the second chirp signal.

12. The front end for a radar system as claimed in claim 2, wherein the voltage controlled oscillator is implemented as a BiCMOS integrated circuit and the tuning voltage has a range of less than 3V or the voltage controlled oscillator is implemented as a CMOS integrated circuit and the tuning voltage has a range of less than 1.8V.

13. The front end for a radar system as claimed in any preceding claim, wherein the width of the first frequency range is 2GHz, the width of the second frequency range is 2GHz and the width of the chirp signal frequency range is 4GHz.

14. A radar system including the radar front end of any of claims 1 to 13 and wherein the radar system is an automotive radar system.

15. A method of controlling a front end of a radar system to emulate a chirp signal over a chirp signal frequency range, wherein the front end includes at least a first transmitter channel, at least a first receiver channel, a chirp generator arranged to supply chirp signals to the at least first transmitter channel and the at least first receiver channel and a timing engine arranged to control the chirp generator, the method comprising:
controlling the chirp generator to generate a first chirp signal over a first frequency range;
controlling the front end to stop acquiring data at a stop frequency toward the end of the first chirp signal;
controlling the chirp generator to generate a second chirp signal over a second frequency range; and
controlling the front end to start acquiring data at a start frequency toward the start of the second chirp signal, wherein the stop frequency and the start frequency are contiguous.
